# EUROPEAN PATENT APPLICATION

(11) **EP 4 227 722 A1**
(43) Date of publication of application: **16.08.2023**
(21) Application number: 23156188.7
(22) Date of filing: 10.02.2023
(51) Int. Cl.: G02B 19/00

(54) **DISPLAY DEVICE**

(30) Priority: 14.02.2022 JP 2022020325
(71) Applicant: Funai Electric Co., Ltd., Daito, Osaka, 574-0013 (JP)
(72) Inventor: OGAWA, Akihisa, Daito, Osaka, 574-0013 (JP)
(74) Representative: Global IP Europe Patentanwaltskanzlei

(57) **Abstract**

A display device for a mobile vehicle comprises at least one light emitting part, an emission angle adjustment part, and a light control film part. The emission angle adjustment part is configured to transmit light from the at least one light emitting part therethrough while adjusting an emission angle of the light from the at least one light emitting part. The light control film part is configured to switch between a transmitting state to transmit light from the emission angle adjustment part therethrough and a diffusing state to diffuse the light from the emission angle adjustment part. The emission angle adjustment part has at least one louver portion that is made of reflective material and is configured to adjust the emission angle of the light from the at least one light emitting part.

## Description

This application claims priority to Japanese Patent Application No. 2022-20325 filed in Japan on February 14, 2022.

### BACKGROUND

### Field of the Invention

This invention generally relates to a display device. More specifically, this invention relates to a display device for a mobile vehicle.

### Background Information

Generally, mobile vehicle mounted display devices, such as automotive display devices, are equipped with light emitting parts that emit light (see JP 6941945 B), for example).

In the above-mentioned JP 6941945 B, an automotive display device is equipped with a backlight that emits light. This automotive display device is equipped with a scattering liquid crystal sheet and a viewing angle limiting film. The scattering liquid crystal sheet is configured to electrically change the light scattering characteristics. The viewing angle limiting film is configured to narrow the light distribution characteristics of the light emitted from the backlight in the direction in which the driver seat and the passenger seat are aligned (a left-right direction) to match the position of the passenger seat. Specifically, the viewing angle limiting film is configured to absorb the light emitted on the driver seat side and transmit light emitted on the passenger seat side in order to narrow the light distribution characteristics in the left-right direction.

### SUMMARY

However, in the automotive display device of the above-mentioned JP 6941945 B, the viewing angle limiting film absorbs the light emitted on the driver seat side, which results in a problem that emission efficiency of the light of the backlight emitted from the viewing angle limiting film is decreased because the arrival of the light from the backlight on the driver seat side is suppressed.

One object of the present invention is to provide a display device for a mobile vehicle that can suppress arrival of light of a light emitting part to a driver seat side and suppress the decrease in emission efficiency, which indicates the ratio of light emitted outside the display device out of the light of the light emitting part emitted from an emission angle adjustment part.
(1) In view of the state of the known technology, a display device for a mobile vehicle according to one aspect of the present invention comprises at least one light emitting part configured to emit light, an emission angle adjustment part configured to transmit the light from the at least one light emitting part therethrough while adjusting an emission angle of the light from the at least one light emitting part, and a light control film part arranged to sandwich the emission angle adjustment part between the at least one light emitting part and the light control film part in a first direction of the display device, the light control film part being configured to switch between a transmitting state to transmit light from the emission angle adjustment part therethrough and a diffusing state to diffuse the light from the emission angle adjustment part, the emission angle adjustment part having at least one louver portion that is made of reflective material and is configured to adjust the emission angle of the light from the at least one light emitting part.
   With the display device mentioned above, as described above, the emission angle adjustment part has the at least one louver portion that is made of reflective material and is configured to adjust the emission angle of the light from the at least one light emitting part. As a result, unlike the case in which a louver portion is formed of a light absorbing material, the at least one louver portion can reflect the light from the at least one light emitting part without absorbing the light. As a result, for example, if the at least one louver portion is used to adjust the emission angle of light emitted outside the display device toward a passenger seat, then an emission light amount of light emitted toward a driver seat can be suppressed while suppressing a decrease of emission efficiency, which indicates the ratio of the light emitted outside the display device out of the light of the at least one light emitting part emitted from the emission angle adjustment part.
(2) In accordance with a preferred embodiment according to the display device mentioned above, the at least one louver portion is inclined at a predetermined angle relative to the first direction to direct the light from the at least one light emitting part toward one side of a second direction of the display device that is perpendicular to the first direction.
(3) In accordance with a preferred embodiment according to any one of the display device mentioned above, the at least one louver portion is inclined to direct the light from the at least one light emitting part laterally away from a driver seat of the mobile vehicle while the display device is mounted to the mobile vehicle.
   In accordance with a preferred embodiment according to any one of the display device mentioned above, the at least one louver portion is inclined laterally away from a driver seat of the mobile vehicle as moving toward a front side of the display device along the first direction while the display device is mounted to the mobile vehicle.
(4) In accordance with a preferred embodiment according to any one of the display device mentioned above, the at least one louver portion is inclined laterally toward a passenger seat of the mobile vehicle as moving toward a front side of the display device along the first direction while the display device is mounted to the mobile vehicle. With this configuration, it is possible to bias an emission light amount of light emitted outside the display device toward the passenger seat, and thus it is possible to easily suppress an emission light amount of light emitted toward the driver seat.
(5) In accordance with a preferred embodiment according to any one of the display devices mentioned above, the predetermined angle is an angle more than or equal to 50 degrees and less than or equal to 60 degrees. With this configuration, it is possible to more reliably suppress the emission light amount of the light emitted toward the driver seat, and thus it is possible to more reliably prevent a driver on the driver seat from seeing an image of the display device.
(6) In accordance with a preferred embodiment according to any one of the display devices mentioned above, the at least one louver portion is inclined to control distribution of an emission light amount of light from the light control film part.
(7) In accordance with a preferred embodiment according to any one of the display devices mentioned above, the at least one louver portion is inclined such that a peak of the distribution of the emission light amount is laterally offset from a driver seat of the mobile vehicle while the display device is mounted to the mobile vehicle.
(8) In accordance with a preferred embodiment according to any one of the display devices mentioned above, the at least one louver portion is inclined such that a peak of the distribution of the emission light amount is laterally located away from a driver seat of the mobile vehicle with respect to a passenger seat of the mobile vehicle while the display device is mounted to the mobile vehicle. For example, the at least one louver portion is inclined such that a peak or maximum value of the distribution of the emission light amount of the light from the light control film part is located at a position laterally opposite to the driver seat than a center position of the passenger seat. With this configuration, it is possible to incline the at least one louver portion so that the emission light amount of the light emitted toward the driver seat is decreased, and thus it is possible to make it difficult for the driver to see the image of the display device.
(9) In accordance with a preferred embodiment according to any one of the display devices mentioned above, the at least one louver portion includes a plurality of louver portions that are arranged relative to each other in a second direction of the display device that is perpendicular to the first direction.
(10) In accordance with a preferred embodiment according to any one of the display devices mentioned above, the louver portions are inclined at approximately the same predetermined angle relative to the first direction. With this configuration, it is possible to make the structure of the louver portions to be less complex, and thus it is possible to easily manufacture the emission angle adjustment part.
(11) In accordance with a preferred embodiment according to any one of the display devices mentioned above, the louver portions includes a first louver portion that is inclined at a first predetermined angle relative to the first direction and a second louver portion that is inclined at a second predetermined angle relative to the first direction, the first predetermined angle and the second predetermined angle being different from each other.
   In accordance with a preferred embodiment according to any one of the display devices mentioned above, the first louver portion and the second louver portion are inclined toward a same side of the second direction as moving toward a front side of the display device.
(12) In accordance with a preferred embodiment according to any one of the display devices mentioned above, the first louver portion is laterally located closer to a drive seat of the mobile vehicle than the second louver portion, and the first predetermined angle is greater than the second predetermined angle. For example, a louver portion of the louver portions on the driver seat side is inclined at a greater inclination angle than a louver portion on the passenger seat side with respect to a reference line parallel to the first direction. With this configuration, it is possible for the driver to see the image in an area on the driver seat side of a display screen of the display device due to a smaller inclination angle between the driver seat and the area on the driver seat side, compared to the passenger seat side, and it is possible to further decrease the emission light amount toward the driver seat by making the inclination angle of the louver portion on the driver seat side larger than the inclination angle of the louver portion on the passenger seat side, and thus it is possible to more reliably prevent the driver from seeing the image of the display device.
   In accordance with a preferred embodiment according to any one of the display devices mentioned above, the first louver portion and the second louver portion are inclined away from each other as moving toward a front side of the display device.
   In accordance with a preferred embodiment according to any one of the display devices mentioned above, the first louver portion and the second louver portion are inclined toward each other as moving toward a front side of the display device.
(13) In accordance with a preferred embodiment according to any one of the display devices mentioned above, the emission angle adjustment part has a sheet shape and further includes a translucent material that is disposed between adjacent louver portions of the louver portions. With this configuration, the louver portions are fixed in an inclined state by the predetermined angle in the sheet-shaped emission angle adjustment part, and thus it is possible to suppress the complexity of the structure of the display device by eliminating the need for a structure for angle adjustment of the louver portions.
(14) In accordance with a preferred embodiment according to any one of the display devices mentioned above, the louver portions are arranged such that adjacent louver portions of the louver portions do not overlap each other as viewed in the first direction. With this configuration, it is possible to widen the spacing between the adjacent louver portions, and thus it is possible to increase the amount of the light entering through an aperture between the adjacent louver portions.
(15) In accordance with a preferred embodiment according to any one of the display devices mentioned above, the at least one louver portion further includes a first reflective portion and a second reflective portion, the first reflective portion being located closer to the at least one light emitting part in the first direction than the second reflective portion and having a higher reflectance than the second reflective portion. With this configuration, the light reaching the second or low reflective portion can be less likely emitted from the display device, while the light reaching the first or high reflective portion can be more likely emitted from the display device, and thus the light emitted from the display device can be mainly the light reflected in the first or high reflective portion. As a result, for example, the directivity of the light emitted from the display device can be increased so that it is directed toward the passenger seat, and thus the emission light amount of the light emitted toward the driver seat can be further suppressed.

In accordance with a preferred embodiment according to any one of the display devices mentioned above, the at least one louver portion diagonally extends between opposite surfaces of the emission angle adjustment part in a linear manner.

Another aspect of the present invention provides an assembly of any one of the display devices mentioned above and the mobile vehicle on which the display device is to be mounted.

According to the present invention, it is possible to suppress arrival of light of a light emitting part to a driver seat side and suppress the decrease in emission efficiency, which indicates the ratio of light emitted outside the display device out of the light of the light emitting part emitted from an emission angle adjustment part.

### BRIEF DESCRIPTION OF THE DRAWINGS

Figure 1 is a plan view of a vehicle in which a mobile vehicle mounted display device of a first embodiment is installed.
Figure 2 is a cross-sectional view of a backlight of the mobile vehicle mounted display device of the first embodiment, showing a state in which a light control film part of the backlight is in a diffuse or diffusing state.
Figure 3 is a cross-sectional view of the backlight of the mobile vehicle mounted display device of the first embodiment, showing a state in which the light control film part is in a transparent or transmitting state.
Figure 4 is an enlarged view of an emission angle adjustment part of the mobile vehicle mounted display device of the first embodiment.
Figure 5 illustrates a graph showing an emission light amount according to an emission angle of the light emitted from the mobile vehicle mounted display device of the first embodiment, while the light control film part is in the transparent state.
Figure 6 illustrates a graph showing an emission light amount according to an emission angle of the light emitted from the mobile vehicle mounted display device of the first embodiment, while the light control film part is in the diffuse state.
Figure 7 is an enlarged view of an emission angle adjustment part of a mobile vehicle mounted display device of a second embodiment.
Figure 8 is an enlarged view of an emission angle adjustment part of a mobile vehicle mounted display device of a third embodiment.
Figure 9 illustrates a graph showing an emission light amount according to an emission angle of the light emitted from the mobile vehicle mounted display device of the third embodiment, while a light control film part is in a transparent or transmitting state.
Figure 10 is an enlarged view of an emission angle adjustment part of a mobile vehicle mounted display device of a fourth embodiment.
Figure 11 is an enlarged view of an emission angle adjustment part of a mobile vehicle mounted display device of a fifth embodiment.
Figure 12 illustrates graphs showing an emission light amount according to an emission angle of light emitted from a mobile vehicle mounted display device of a first example, while a light control film part is in a transparent or transmitting state.
Figure 13 illustrates graphs showing an emission light amount according to an emission angle of light emitted from a mobile vehicle mounted display device of a second example, while a light control film part is in a transparent or transmitting state.
Figure 14 illustrates graphs showing an emission light amount according to an emission angle of light emitted from a mobile vehicle mounted display device of a third example, while a light control film part is in a transparent or transmitting state.
Figure 15 illustrates graphs showing an emission light amount according to an emission angle of light emitted from a mobile vehicle mounted display device of a fourth example, while a light control film part is in a transparent or transmitting state.
Figure 16 illustrates graphs showing an emission light amount according to an emission angle of light emitted from a mobile vehicle mounted display device of a fifth example, while a light control film part is in a transparent or transmitting state.
Figure 17 illustrates graphs showing emission efficiencies according to inclination angles when louver portions are formed of reflective material in accordance with a mobile vehicle mounted display device of a sixth example and a graph showing an emission efficiency when louver portions are formed of a light absorbing material in accordance with a comparative example.

### DETAILED DESCRIPTION OF EMBODIMENTS

Selected embodiments will now be explained with reference to the drawings. It will be apparent to those skilled in the art from the present application that the following descriptions of the embodiments are provided for illustration only and not for the purpose of limiting the invention as defined by the appended claims.

### FIRST EMBODIMENT

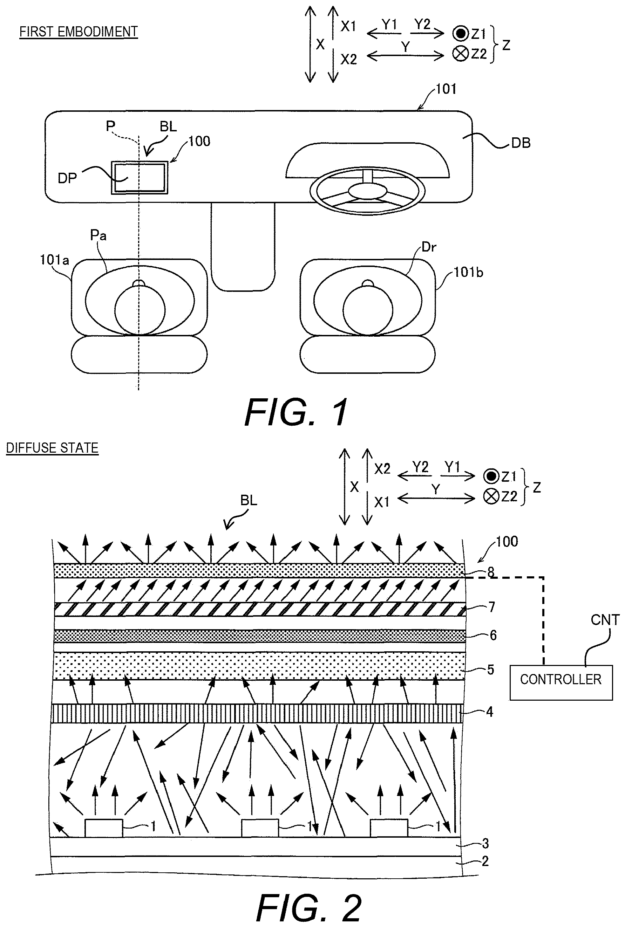

With reference to Figures 1 to 6, the configuration of a mobile vehicle mounted display device 100 in accordance with a first embodiment will be described. As shown in Figure 1, the mobile vehicle mounted display device 100 is positioned directly in front of a passenger seat 101a of a vehicle 101 as a mobile vehicle (at an opposite location in an X direction of the vehicle 101 as described below). Specifically, in the illustrated embodiment, the mobile vehicle mounted display device 100 is mounted to a dashboard DB of the vehicle 101 to display various information or images from navigation system, entertainment system, or other vehicle systems. As seen in Figure 1, the mobile vehicle mounted display device 100 includes a display panel DP and a backlight BL. The display panel DP includes a liquid crystal display panel, for example, and displays information or images on a screen or front surface thereof. The screen of the display panel DP defines a front side of the mobile vehicle mounted display device 100. The backlight BL is disposed behind the display panel DP to illuminate the display panel DP from the back of the display panel DP.

Here, the direction in which the passenger seat 101a of the vehicle 101 and the mobile vehicle mounted display device 100 face each other is the X direction (a front-back direction), the side of the mobile vehicle mounted display device 100 in the X direction is an X1 direction (a front direction), and the side of the passenger seat 101a in the X direction is an X2 direction (a rear direction). The direction in which the passenger seat 101a of the vehicle 101 and the driver seat 101b of the vehicle 101 are aligned is a Y direction (a left-right direction), the side of the passenger seat 101a is a Y1 direction (a left direction), and the side of the driver seat 101b is a Y2 direction (a right direction) in the Y direction. The Y direction is perpendicular to the X direction. The direction perpendicular to the X direction and the Y direction is a Z direction (an up-down direction), and one side of the Z direction is a Z1 direction (an up direction), and the other side of the Z direction is a Z2 direction (a down direction). In the illustrated embodiment, the mobile vehicle mounted display device 100 is mounted to the dashboard DB such that a normal direction of a screen or front surface of mobile vehicle mounted display device 100 (i.e., a screen or front surface of the display panel DP) is parallel to the X direction and the screen or front surface of the mobile vehicle mounted display device 100 faces toward the X2 direction, as seen in Figures 1 to 3. Thus, the X direction is an example of the "first direction" of the present invention, while the Y direction is an example of the "second direction" of the present invention.

In the illustrated embodiment, the mobile vehicle mounted display device 100 is configured to narrow the viewing angle so that while the driver Dr is driving the vehicle 101, the driver Dr has difficulty seeing the screen of the mobile vehicle mounted display device 100 but the passenger Pa can see the screen of the mobile vehicle mounted display device 100. The mobile vehicle mounted display device 100 is also configured to widen the viewing angle so that the driver Dr and the passenger Pa both can see the screen of the mobile vehicle mounted display device 100 while the vehicle 101 is being stopped. In other words, the mobile vehicle mounted display device 100 is configured to switch the viewing angle of the screen of the mobile vehicle mounted display device 100 according to an operating state of the vehicle 101.

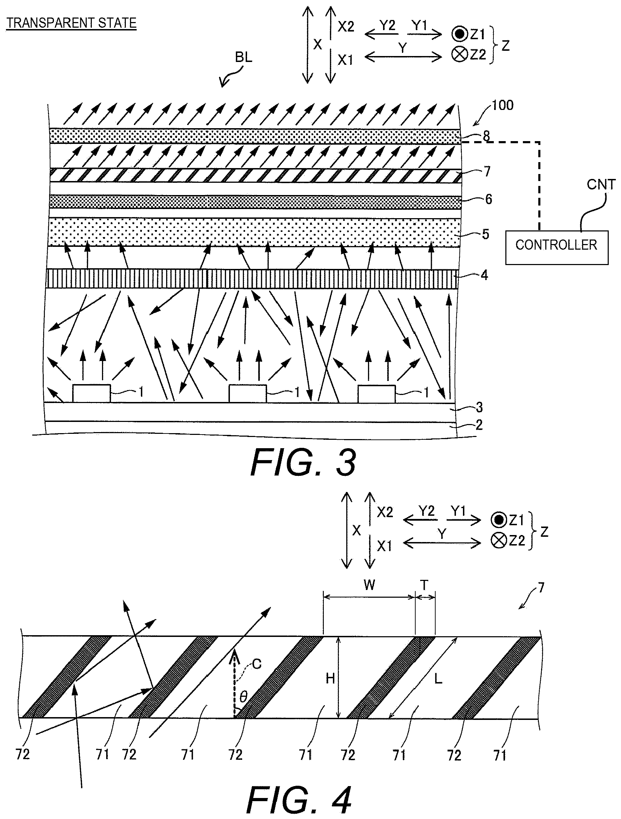

As shown in Figures 2 and 3, the backlight BL of the mobile vehicle mounted display device 100 has a plurality of light emitting parts or elements 1 (e.g., at least one light emitting part), a substrate 2, a rear reflection sheet 3, a light equalization sheet 4, a diffuser plate 5, a prism sheet 6, an emission angle adjustment part or emission angle adjuster 7, and a light control film part or light control film 8. Although not shown in Figures 2 and 3, with the mobile vehicle mounted display device 100, the display panel DP (Figure 1) is disposed in the X2 direction relative the backlight BL or the light control film part 8 so as to be illuminated with light emitted from the backlight BL or the light control film part 8.

The light emitting parts 1 are configured to emit light. The light emitting parts 1 include a light emitting element that emits light when energized. In the illustrated embodiment, the light emitting parts 1 include an LED (Light Emitting Diode).

The substrate 2 is a printed wiring substrate. As seen in Figures 2 and 3, the plurality of (three) light emitting parts 1 are arranged on a surface of the substrate 2 on the X2 direction side. There may be one, two, or four or more light emitting parts 1. A connector (not shown) to which power is supplied from the outside is arranged on the substrate 2. The substrate 2 has a flat plate shape.

The rear reflective sheet 3 is configured to increase light utilization efficiency by re-reflecting light that has been reflected by the light equalization sheet 4 or other sheets and returned to the substrate 2. This allows light to travel from areas other than the light emitting parts 1 toward a light emitting surface of the mobile vehicle mounted display device 100, thereby making it possible to uniform the luminance distribution. The rear reflective sheet 3 is positioned between the substrate 2 and the light equalization sheet 4. The rear reflective sheet 3 is formed in the form of a sheet.

The light equalization sheet 4 is provided to make the luminance distribution uniform. The light equalization sheet 4 is positioned between the rear reflective sheet 3 and the diffuser plate 5. The light equalization sheet 4 has a plurality of through holes of different sizes (not shown) for transmitting light irradiated from the light emitting parts 1. The light equalization sheet 4 is formed in the form of a sheet.

The diffuser plate 5 is configured to diffuse the light that has passed through the light equalization sheet 4 and entered the diffuser plate 5. The diffuser plate 5 is positioned between the light equalization sheet 4 and the prism sheet 6. The diffuser plate 5 has a thin plate shape.

The prism sheet 6 is provided to increase the light utilization efficiency of the mobile vehicle mounted display device 100. The prism sheet 6 is positioned between the diffuser plate 5 and the emission angle adjustment part 7. The prism sheet 6 is formed in the form of a sheet. The emission angle adjustment part 7 is configured to adjust the emission angle of the light emitted from the light emitting parts 1 and emitted outside the mobile vehicle mounted display device 100. In particular, the emission angle adjustment part 7 is configured to transmit the light from the light emitting parts 1 therethrough while adjusting the emission angle of the light from the light emitting parts 1. The emission angle adjustment part 7 will be explained in detail later.

The light control film part 8 is a light control film, such as a liquid crystal light control film, that is configured to switch between a transparent or transmitting state to transmit the light from the emission angle adjustment part 7 and a diffuse or diffusing state to diffuse the light emitted from the emission angle adjustment part 7. The light control film part 8 is located on the opposite side (X2 direction side) of the emission angle adjustment part 7 from the light emitting part 1 side. Specifically, as seen in Figures 2 and 3, the light control film part 8 is arranged to sandwich the emission angle adjustment part 7 between the light emitting parts 1 and the light control film part 8 in the X direction (e.g., the first direction) of the mobile vehicle mounted display device 100. The light control film part 8 in the diffuse state diffuses the light emitted from the emission angle adjustment part 7 to widen the viewing angle so that the driver Dr and the passenger Pa both can see the screen of the mobile vehicle mounted display device 100. On the other hand, the light control film part 8 in the transparent state transmits the light emitted from the emission angle adjustment part 7 to narrow the viewing angle so that the driver Dr has difficulty seeing the screen of the mobile vehicle mounted display device 100 and the passenger Pa can see the screen of the mobile vehicle mounted display device 100. The light control film part 8 has a thin film shape in the X direction. Specifically, the light control film part 8 is configured to switch between the transparent state and the diffuse state by switching whether to be energized or not. In the illustrated embodiment, as seen in Figures 2 and 3, the light control film part 8 is electrically connected to an electronic controller or driver CNT. The electronic controller CNT is operatively connected to an electronic control unit (ECU) or other controller of the vehicle 101 to obtain the operating state of the vehicle 101, and turns the electric power supply to the light control film part 8 on or off according to the operating state of the vehicle 101. For example, the light control film part 8 can be a light control film that is switched to the diffuse state while the electric power supply is turned off and is switched to the transparent state while the electric power supply is turned on. In this case, the electronic controller CNT turns off the electric power supply to the light control film part 8 while the obtained operating state of the vehicle 101 indicates that the vehicle 101 is being stopped or the driver Dr is not operating or driving the vehicle 101, which switches the light control film part 8 to the diffuse state to widen the viewing angle of the mobile vehicle mounted display device 100, as shown in Figure 2. On the other hand, the electronic controller CNT turns on the electric power supply to the light control film part 8 while the obtained operating state of the vehicle 101 indicates that the vehicle 101 is not being stopped or the driver Dr is operating or driving the vehicle 101, which switches the light control film part 8 to the transparent state to narrow the viewing angle of the mobile vehicle mounted display device 100, as shown in Figure 3.

### (Emission Angle Adjustment Part)

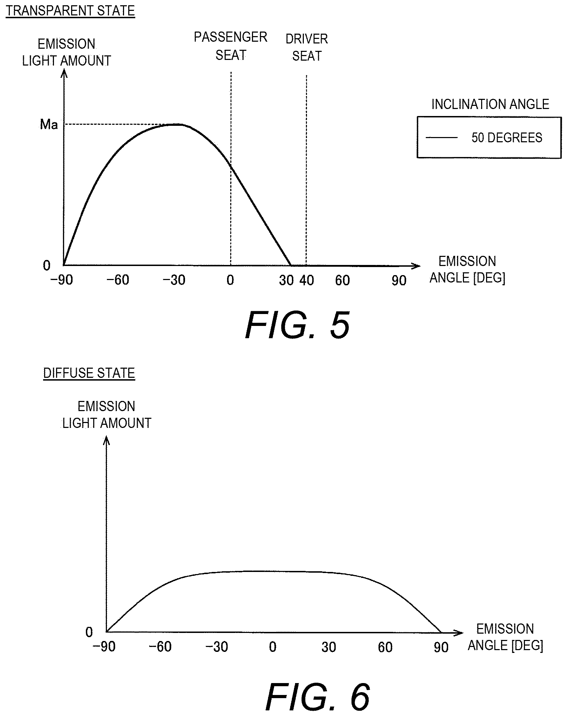

As shown in Figures 4 and 5, the emission angle adjustment part 7 of the first embodiment is configured to bias the distribution of the light emitted outside the mobile vehicle mounted display device 100 in one direction, while suppressing a decrease in an emission light amount of the light emitted outside the mobile vehicle mounted display device 100. In the illustrated embodiment, the emission angle adjustment part 7 includes a light control film, such as a louver film, that controls the distribution of light.

Specifically, the emission angle adjustment part 7 includes a plurality of louver portions 72. In the illustrated embodiment, the emission angle adjustment part 7 also includes a plurality of translucent materials 71. The emission angle adjustment part 7 has a sheet shape. The translucent materials 71 are each disposed between adjacent louver portions 72. The sheet-shaped emission angle adjustment part 7 is formed by cutting a laminate of the translucent materials 71 and the louver portions 72. The translucent materials 71 are arranged side by side in the Y direction. The translucent materials 71 are formed of a light transmitting material (e.g., transparent resin material).

The louver portions 72 are configured to reflect light and adjust the emission angle of the light emitted outside the mobile vehicle mounted display device 100. The louver portions 72 are made of a reflective material, which is typically used in backlights of display devices or the like. The louver portions 72 are formed, for example, of a white sheet or silver reflective sheet. For example, the reflective material of the louver portions 72 is different from a light absorbing material, and the reflectance of the louver portions 72 relative to the light from the light emitting parts 1 is more than 0.8, is preferably more than 0.9, and is more preferably more than 0.97. In the illustrated embodiment, the reflectance of the louver portions 72 relative to the light from the light emitting parts 1 is 0.98, for example.

The louver portions 72 are configured to adjust the emission angle of the light from the light emitting parts 1. The louver portions 72 are configured to control or bias the distribution of the light emitted outside the mobile vehicle mounted display device 100 toward the passenger seat 101a. In the illustrated embodiment, the louver portions 72 are inclined at a predetermined angle θ relative to the X direction to direct the light from the light emitting parts 1 toward the Y1 direction side (e.g., one side) of the Y direction (e.g., the second direction) of the mobile vehicle mounted display device 100, as seen in Figure 4. Thus, the louver portions 72 are inclined to direct the light from the light emitting parts 1 laterally away from the driver seat 101b of the vehicle 101 while the mobile vehicle mounted display device 100 is mounted to the vehicle 101, as seen in Figure 1. As understood from Figures 1 and 4, the louver portions 72 are inclined laterally away from the driver seat 101b of the vehicle 101 as moving toward the X2 direction side (e.g., the front side) of the mobile vehicle mounted display device 100 along the X direction (e.g., the first direction) while the mobile vehicle mounted display device 100 is mounted to the vehicle 101. In particular, in the illustrated embodiment, the louver portions 72 are inclined at the predetermined angle θ toward the passenger seat 101a of the vehicle 101 to direct the emission angle of the light emitted outside the mobile vehicle mounted display device 100 toward the passenger seat 101a. Thus, the louver portions 72 are inclined laterally toward the passenger seat 101a of the vehicle 101 as moving toward the X2 direction side of the mobile vehicle mounted display device 100 along the X direction while the mobile vehicle mounted display device 100 is mounted to the vehicle 101. The louver portions 72 are inclined at the predetermined angle θ in the Y1 direction as it moves toward the X2 direction. The predetermined angle θ is an angle more than or equal to 50 and less than or equal to 60 degrees toward the Y1 direction side (the passenger seat 101a side) with respect to a reference line C parallel to the X direction. The predetermined angle θ is, for example, about 50 degrees.

The louver portions 72 are inclined at the predetermined angle θ so that the maximum value (peak) Ma of the emission light amount of the light emitted from the light control film part 8 toward the passenger seat 101a side is at a position opposite to the driver seat 101b of the vehicle 101 than the center position P (see Figure 1) of the passenger seat 101a. Here, in Figure 5, the emission angle near 0 degrees is the emission angle corresponding to the position of the passenger seat 101a, and the emission angle near 40 degrees is the emission angle corresponding to the position of the driver seat 101b. In Figure 5, the emission angle at which the emission light amount is the maximum value Ma is the emission angle near -30 degrees. The emission angle near -30 degrees is the emission angle near the window on the passenger seat 101 a side. In the illustrated embodiment, the louver portion 72 are inclined to control the distribution of the emission light amount of the light from the light control film part 8. In particular, as seen in Figure 5, the louver portions are inclined such that the maximum value (peak) Ma of the distribution of the emission light amount is laterally offset from the driver seat 101b of the vehicle 101 while the mobile vehicle mounted display device 100 is mounted to the vehicle 101. Specifically, as seen in Figure 5, the louver portions 72 are inclined such that the maximum value (peak) Ma of the distribution of the emission light amount is laterally located away from the driver seat 101b of the vehicle 101 with respect to the passenger seat 101a of the vehicle 101 while the mobile vehicle mounted display device 100 is mounted to the vehicle 101.

As shown in Figure 4, the louver portions 72 are arranged relative to each other in the Y direction (e.g., the second direction). The louver portions 72 are inclined at approximately the same predetermined angle θ relative to the X direction. In the illustrated embodiment, as shown in Figure 4, the louver portions 72 diagonally extend between opposite surfaces (i.e., an X1 direction side surface and an X2 direction side surface) of the emission angle adjustment part 7 in a linear manner.

The spacing W of each of the plurality of louver portions 72 is greater than the thickness T of the louver portions 72 in the Y direction. The spacing W of each of the plurality of louver portions 72 is greater than the thickness H of the sheet-shaped emission angle adjustment part 7 in the X direction. Also, as viewed from the X1 direction side in the X direction, the adjacent louver portions 72 are arranged so that they do not overlap each other. Each of the plurality of louver portions 72 has the thickness T that is approximately the same. Each of the plurality of louver portions 72 has approximately the same length L in the direction inclined at the predetermined angle θ.

With such louver portions 72, the distribution of the light emitted outside the mobile vehicle mounted display device 100 is biased toward the passenger seat 101a side by the louver portions 72 while the light control film part 8 is in the transparent state, as shown in Figure 5. On the other hand, by diffusing the light emitted from the emission angle adjustment part 7 by the light control film part 8 (i.e., while the light control film part 8 is in the diffuse state), the distribution of the light emitted outside the mobile vehicle mounted display device 100 can be distributed evenly on both the passenger seat 101a side and the driver seat 101b side by the light control film part 8, as shown in Figure 6.

### (Effect of First Embodiment)

The first embodiment has the following effects.

In the first embodiment, as described above, the emission angle adjustment part 7 includes the louver portions 72 that reflect light and adjust the emission angle of the light emitted outside the device. As a result, unlike the case in which the louver portions 72 are formed of a light absorbing material, the louver portions 72 can reflect the light emitted from the light emitting parts 1 and emitted outside the device without absorbing the light. As a result, for example, if the louver portions 72 are used to adjust the emission angle of the light emitted outside the device toward the passenger seat 101a side, the emission light amount of the light emitted toward the driver seat 101b side can be suppressed while suppressing a decrease of the emission efficiency, which indicates the ratio of the light emitted outside the device out of the light of the light emitting parts 1 emitted from the emission angle adjustment part 7.

Also, in the first embodiment, as described above, the louver portions 72 are inclined at the predetermined angle θ toward the passenger seat 101a side of the vehicle 101 to direct the emission angle of the light emitted outside the device toward the passenger seat 101a side. With this configuration, it is possible to bias the emission light amount of the light emitted outside the mobile vehicle mounted display device 100 toward the passenger seat 101a side, and thus it is possible to easily suppress the emission light amount of the light emitted toward the driver seat 101b side.

Also, in the first embodiment, as described above, the predetermined angle θ is an angle inclined more than or equal to 50 degrees and less than or equal to 60 degrees toward the passenger seat 101a side with respect to the reference line C parallel to the X direction (the direction from the light emitting parts 1 to the emission angle adjustment part 7). With this configuration, it is possible to more reliably suppress the emission light amount of the light emitted on the driver seat 101b side, and thus it is possible to more reliably prevent the driver Dr from seeing the image of the mobile vehicle mounted display device 100 when it is desired to prevent the driver Dr from seeing the image of the mobile vehicle mounted display device 100.

Also, in the first embodiment, as described above, the louver portions 72 are inclined at the predetermined angle θ so that the maximum value Ma of the emission light amount of the light emitted from the light control film part 8 toward the passenger seat 101a side is at a position opposite to the driver seat 101b of the vehicle 101 than the center position P of the passenger seat 101a. With this configuration, it is possible to incline the louver portions 72 so that the emission light amount of the light emitted on the driver seat 101b side is decreased, and thus it is possible to make it difficult for the driver Dr to see the image of the mobile vehicle mounted display device 100.

Also, in the first embodiment, as described above, the plurality of louver portions 72 are arranged in line in the Y1 direction (the direction from the driver seat 101b of the vehicle 101 to the passenger seat 101a). Each of the plurality of louver portions 72 is inclined at approximately the same predetermined angle θ. With this configuration, it is possible to make the structure of the louver portions 72 to be less complex, and thus it is possible to easily manufacture the emission angle adjustment part 7.

Also, in the first embodiment, as described above, the plurality of louver portions 72 are arranged in line in the Y1 direction of the vehicle 101 (the direction from the driver seat 101b to the passenger seat 101a). The emission angle adjustment part 7 has a sheet shape in which the translucent materials 71 are disposed between the plurality of inclined louver portions 72. As a result, the louver portions 72 are fixed in an inclined state by the predetermined angle θ in the sheet-shaped emission angle adjustment part 7, and thus it is possible to suppress the complexity of the structure of the mobile vehicle mounted display device 100 by eliminating the need for a structure for angle adjustment of the louver portions 72.

Also, in the first embodiment, as described above, the plurality of louver portions 72 are arranged in line in the Y1 direction (the direction from the driver seat 101b of the vehicle 101 to the passenger seat 101a). The adjacent louver sections 72 are arranged so that they do not overlap each other as viewed from the X direction (the direction in which the light emitting parts 1 and the emission angle adjustment part 7 are aligned). With this configuration, it is possible to widen the spacing between the adjacent louver portions 72, and thus it is possible to increase the amount of the light entering through apertures between the adjacent louver portions 72.

### SECOND EMBODIMENT

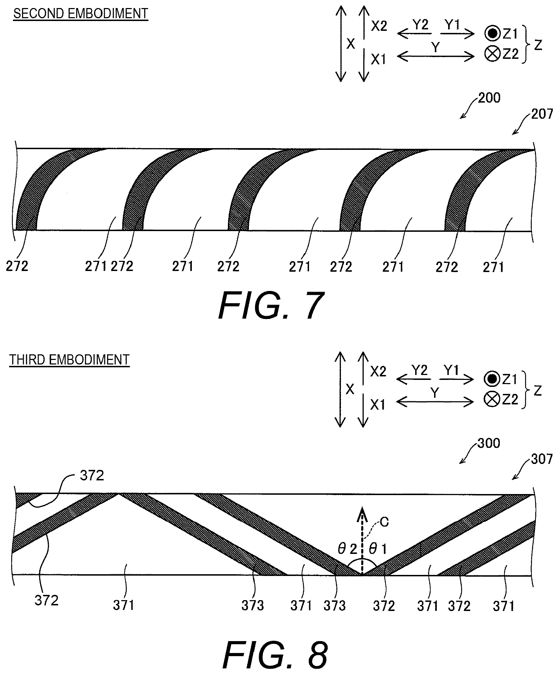

Referring to Figure 7, the configuration of a mobile vehicle mounted display device 200 according to a second embodiment will be described. In the second embodiment, unlike the first embodiment, the cross-sectional shape of louver portions 272 is an arc shape. In the second embodiment, the same configurations as in the first embodiment are omitted from the description.

As shown in Figure 7, the mobile vehicle mounted display device 200 of the second embodiment has the light emitting parts 1, the substrate 2, the rear reflection sheet 3, the light equalization sheet 4, the diffuser plate 5, the prism sheet 6, an emission angle adjustment part 207, and the light control film part 8.

### (Emission Angle Adjustment Part)

As shown in Figure 7, the emission angle adjustment part 207 of the second embodiment is configured to bias the distribution of the light emitted outside the mobile vehicle mounted display device 200 in one direction while suppressing the decrease in the emission light amount of the light emitted outside the mobile vehicle mounted display device 200.

Specifically, the emission angle adjustment part 207 includes a plurality of translucent materials 271 and a plurality of louver portions 272. The plurality of louver portions 272 have an arc shape in a cross-section along the Y direction that expands toward the X2 direction as it moves toward the Y direction. Thus, the louver portions 272 diagonally extend between opposite surfaces (i.e., an X1 direction side surface and an X2 direction side surface) of the emission angle adjustment part 207 in a curved manner. Other configurations of the second embodiment are the same as those of the first embodiment above.

### (Effect of Second Embodiment)

In the second embodiment, as in the first embodiment above, the emission angle adjustment part 207 includes the louver portions 272 that reflect light and adjust the emission angle of the light emitted outside the device. With this configuration, it is possible to suppress the decrease in the emission efficiency, which indicates the ratio of the light emitted outside the device out of the light of the light emitting parts 1 emitted from the emission angle adjustment part 207, while suppressing the emission light amount of the light emitted on the driver seat 101b side. Other effects of the second embodiment are the same as those of the first embodiment.

### THIRD EMBODIMENT

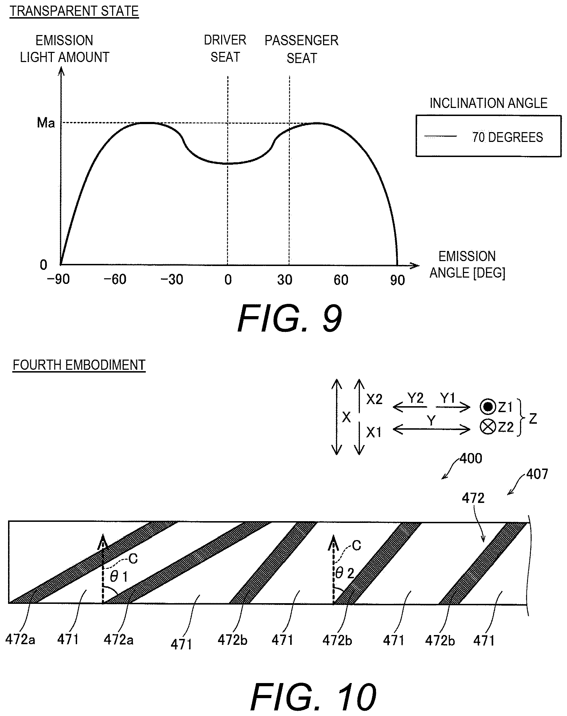

Referring to Figures 8 and 9, the configuration of a mobile vehicle mounted display device 300 according to a third embodiment will be described. In the third embodiment, unlike the first embodiment, an emission angle adjustment part 307 includes a plurality of translucent materials 371, a plurality of first louver portions 372, and a plurality of second louver portions 373. In the third embodiment, the same configurations as in the first embodiment are omitted from the description.

As shown in Figure 8, the mobile vehicle mounted display device 300 of the third embodiment has the light emitting parts 1, the substrate 2, the rear reflection sheet 3, the light equalization sheet 4, the diffuser plate 5, the prism sheet 6, the emission angle adjustment part 307, and the light control film part 8.

Here, the direction in which the driver seat 101b of the vehicle 101 and the mobile vehicle mounted display device 300 face each other is the X direction (the front-back direction), the side of the mobile vehicle mounted display device 300 in the X direction is the X1 direction (the front direction), and the side of the driver seat 101b in the X direction is the X2 direction (the rear direction). The direction in which the passenger seat 101a of the vehicle 101 and the driver seat 101b of the vehicle 101 are aligned is the Y direction (the left-right direction), the side of the passenger seat 101a is the Y1 direction (the left direction), and the side of the driver seat 101b is the Y2 direction (the right direction) in the Y direction. The direction orthogonal to the X direction and the Y direction is the Z direction (the up-down direction), and one side of the Z direction is the Z1 direction (the up direction), and the other side of the Z direction is the Z2 direction (the down direction). Thus, in the illustrated embodiment, the mobile vehicle mounted display device 300 is positioned directly in front of the driver seat 101b of the vehicle 101.

### (Emission Angle Adjustment Part)

As shown in Figure 8, the emission angle adjustment part 307 of the third embodiment is configured to bias the distribution of the light emitted outside the mobile vehicle mounted display device 300 in one direction, while suppressing the decrease in the emission light amount of the light emitted outside the mobile vehicle mounted display device 300.

Specifically, the emission angle adjustment part 307 includes the plurality of translucent materials 371, the plurality of first louver portions 372, and the plurality of second louver portions 373. The first louver portions 372 and the second louver portions 373 are examples of "louver portions" of the claims.

The first louver portions 372 are inclined at a predetermined angle θ1 in the Y1 direction as it moves toward the X2 direction. The predetermined angle θ1 is an angle inclined more than or equal to 60 degrees toward the Y1 direction side (the passenger seat 101a side) with respect to a reference line C parallel to the X direction. The predetermined angle θ1 is, for example, about 70 degrees. The second louver portions 373 are inclined at a predetermined angle θ2 in the Y2 direction as it moves toward the X2 direction. The predetermined angle θ2 is an angle inclined more than or equal to 60 degrees toward the Y2 direction side (the driver seat 101b side) with respect to the reference line C parallel to the X direction. The predetermined angle θ2 is, for example, about 70 degrees. In the illustrated embodiment, the emission angle adjustment part 307 includes the first louver portions 372 that are inclined at the predetermined angle θ1 (e.g., the first predetermined angle) relative to the X direction (e.g., the first direction) and the second louver portions 373 that are inclined at the predetermined angle θ2 (e.g., the second predetermined angle) relative to the X direction. The predetermined angles θ1 and θ2 are different from each other. As seen in Figure 8, the first louver portions 372 (located on the Y1 direction side) and the second louver portions 373 are inclined away from each other as moving toward the X2 direction side (e.g., the front side) of the mobile vehicle mounted display device 300. Also, as seen in Figure 8, the first louver portions 372 (located on the Y2 direction side) and the second louver portions 373 are inclined toward each other as moving toward the X2 direction side of the mobile vehicle mounted display device 300.

As shown in Figure 9, the first louver portions 372 and the second louver portions 373 are each inclined at the predetermined angle θ1 and at the predetermined angle θ2, respectively, so that the maximum value Ma of the emission light amount of the light emitted from the light control film part 8 toward the passenger seat 101a side is at a position opposite to the driver seat 101b of the vehicle 101 than the center position P (see Figure 1) of the passenger seat 101a. Here, in Figure 9, the emission angle near 0 degrees is the emission angle corresponding to the position of the driver seat 101b, and the emission angle near 30 degrees is the emission angle corresponding to the position of the passenger seat 101a. In Figure 9, the emission angle at which the emission light amount is the maximum value Ma is the emission angle near 40 degrees. The emission angle near 40 degrees is the emission angle near the window on the passenger seat 101a side.

With these first louver portions 372 and second louver portions 373, the distribution of the light emitted outside the mobile vehicle mounted display device 300 is biased toward the passenger seat 101a side. Other configurations of the third embodiment are the same as those of the first embodiment above.

### (Effect of Third Embodiment)

In the third embodiment, as in the first embodiment above, the emission angle adjustment part 307 includes the first louver portions 372 and the second louver portions 373 that reflect light and adjust the emission angle of the light emitted outside the device. With this configuration, it is possible to suppress the decrease in the emission efficiency, which indicates the ratio of the light emitted outside the device out of the light of the light emitting parts 1 emitted from the emission angle adjustment part 307, while suppressing the emission light amount of the light emitted on the driver seat 101b side. Other effects of the third embodiment are the same as those of the first embodiment.

### FOURTH EMBODIMENT

Referring to Figure 10, the configuration of a mobile vehicle mounted display device 400 according to a fourth embodiment will be described. In the fourth embodiment, unlike the first embodiment, an emission angle adjustment part 407 includes first louver portions 472a inclined at a predetermined angle θ1 and second louver portions 472b inclined at a predetermined angle θ2. In the fourth embodiment, the same configuration as in the first embodiment is omitted from the description.

As shown in Figure 10, the mobile vehicle mounted display device 400 of the fourth embodiment has the light emitting parts 1, the substrate 2, the rear reflection sheet 3, the light equalization sheet 4, the diffuser plate 5, the prism sheet 6, the emission angle adjustment part 407, and the light control film part 8.

### (Emission Angle Adjustment Part)

As shown in Figure 10, the emission angle adjustment part 407 of the fourth embodiment is configured to bias the distribution of the light emitted outside the mobile vehicle mounted display device 400 in one direction while suppressing the decrease in the emission light amount of the light emitted outside the mobile vehicle mounted display device 400.

Specifically, the emission angle adjustment part 407 includes a plurality of translucent materials 471 and a plurality of louver portions 472. The plurality of louver portions 472 include the plurality of first louver portions 472a and the plurality of second louver portions 472b. The first louver portions 472a are disposed on the Y2 direction side (the driver seat 101b side). The first louver portions 472a are inclined at the predetermined angle θ1 in the Y1 direction as it moves toward the X2 direction. The second louver portions 472b are disposed on the Y1 direction side (the passenger seat 101a side). The second louver portions 472b are inclined at the predetermined angle θ2 in the Y1 direction as it moves toward the X2 direction. The first louver portions 472a on the Y2 direction side (the driver seat 101b side) of the plurality of louver portions 472 are inclined at a greater inclination angle than the second louver portions 472b on the passenger seat 101a side relative to a reference line C parallel to the X direction. In the illustrated embodiment, the louver portions 472 include the first louver portions 472a that are inclined at the predetermined angle θ1 (e.g., the first predetermined angle) relative to the X direction (e.g., the first direction) and the second louver portions 472b that are inclined at the predetermined angle θ2 (e.g., the second predetermined angle) relative to the X direction. The predetermined angles θ1 and θ2 are different from each other. As seen in Figure 10, the first louver portions 472a and the second louver portions 472b are inclined toward the same side (i.e., Y1 direction side) of the Y direction (e.g., the second direction) as moving toward the X2 direction side (e.g., the front side) of the mobile vehicle mounted display device 400. Specifically, as understood from Figures 1 and 10, the first louver portions 472a are laterally located closer to the drive seat 101b of the vehicle 101 than the second louver portions 472b, and the predetermined angle θ1 is greater than the predetermined angle θ2. Other configurations of the fourth embodiment are the same as those of the first embodiment above.

### (Effect of Fourth Embodiment)

In the fourth embodiment, as in the first embodiment above, the emission angle adjustment part 407 includes the louver portions 472 that reflect light and adjust the emission angle of the light emitted outside the device. With this configuration, it is possible to suppress the decrease in the emission efficiency, which indicates the ratio of the light emitted outside the device out of the light of the light emitting parts 1 emitted from the emission angle adjustment part 407, while suppressing the emission light amount of the light emitted on the driver seat 101b side.

Also, in the fourth embodiment, as described above, the louver portions 472 are arranged in line in the Y1 direction (the direction from the driver seat 101b of the vehicle 101 to the passenger seat 101a). The first louver portions 472a on the driver seat 101b side out of the plurality of louver portions 472 are inclined at a greater inclination angle than the second louver portions 472b on the passenger seat 101a side relative to the reference line C parallel to the X2 direction (the direction from the light emitting parts 1 to the emission angle adjustment part 7). With this configuration, it is easier for the driver Dr to see the image in an area on the driver seat 101b side of the display screen of the mobile vehicle mounted display device 400 due to a smaller inclination angle between the driver seat 101b and the area on the driver seat 101b side, compared to the passenger seat 101a side, but it is possible to further decrease the emission light amount toward the driver seat 101b side by making the inclination angle of the louver portions 472 on the driver seat 101b side larger than the inclination angle of the louver portions 472 on the passenger seat 101a side, and thus it is possible to more reliably prevent the driver Dr from seeing the image of the mobile vehicle mounted display device 400. Other effects of the fourth embodiment are the same as those of the first embodiment.

### FIFTH EMBODIMENT

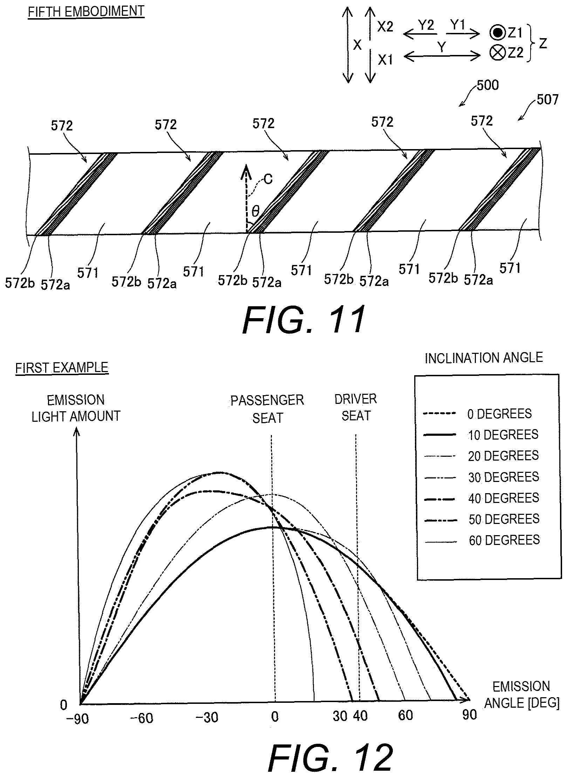

Referring to Figure 11, the configuration of a mobile vehicle mounted display device 500 according to a fifth embodiment will be described. In the fifth embodiment, unlike the first embodiment, louver portions 572 include a high reflectance portion 572a and a low reflectance portion 572b. In the fifth embodiment, the same configuration as in the first embodiment is omitted from the description.

As shown in Figure 11, the mobile vehicle mounted display device 500 of the fifth embodiment has the light emitting parts 1, the substrate 2, the rear reflection sheet 3, the light equalization sheet 4, the diffuser plate 5, the prism sheet 6, an emission angle adjustment part 507, and the light control film part 8.

### (Emission Angle Adjustment Part)

As shown in Figure 11, the emission angle adjustment part 507 of the fifth embodiment is configured to bias the distribution of the light emitted outside the mobile vehicle mounted display device 500 in one direction while suppressing the decrease in the emission light amount of the light emitted outside the mobile vehicle mounted display device 500.

Specifically, the emission angle adjustment part 507 includes a plurality of translucent materials 571 and a plurality of louver portions 572. Each of the plurality of louver portions 572 includes the high reflectance portion 572a and the low reflectance portion 572b. The high reflectance portion 572a is formed of a high reflectance material with a high reflectance of light. The high reflectance portion 572a is provided on the X1 direction side (the light emitting part 1 side). The low reflectance portion 572b is formed of a lower reflectance material than the high reflectance portion 572a. The low reflectance portion 572b is provided on the X2 direction side (the light control film part 8 side). The low reflectance portion 572b is stacked on the X2 direction side of the high reflectance portion 572a. In the illustrated embodiment, the louver portions 572 each include the high reflectance portion 572a (e.g., the first reflective portion) and the low reflectance portion 572b (e.g., the second reflective portion). As understood from Figures 2, 3 and 11, the high reflectance portion 572a is located closer to the light emitting parts 1 in the X direction than the low reflectance portion 572b and has a higher reflectance than the low reflectance portion 572b. Other configurations of the fifth embodiment are the same as those of the first embodiment above.

### (Effect of Fifth Embodiment)

In the fifth embodiment, as in the first embodiment above, the emission angle adjustment part 507 includes the louver portions 572 that reflect light and adjust the emission angle of the light emitted outside the device. With this configuration, it is possible to suppress the decrease in the emission efficiency, which indicates the ratio of the light emitted outside the device out of the light of the light emitting parts 1 emitted from the emission angle adjustment part 507, while suppressing the emission light amount of the light emitted on the driver seat 101b side.

Also, in the fifth embodiment, as described above, the louver portions 572 includes the high reflectance portion 572a that has the high reflectance and is provided on the light emitting part 1 side and the low reflectance portion 572b that has a lower reflectance than the high reflectance portion 572a and is provided on the light control film part 8 side. With this configuration, the light reaching the low reflectance portion 572b can be less likely emitted from the mobile vehicle mounted display device 500, while the light reaching the high reflectance portion 572a can be more likely emitted from the mobile vehicle mounted display device 500, and thus the light emitted from the mobile vehicle mounted display device 500 can be mainly the light reflected in the high reflectance portion 572a. As a result, the directivity of the light emitted from the mobile vehicle mounted display device 500 can be increased so that it is directed toward the passenger seat 101a side, and thus the emission light amount of the light emitted toward the driver seat 101b side can be further suppressed. Other effects of the fifth embodiment are the same as those of the first embodiment.

### EXAMPLES

Next, with reference to Figures 12 to17, first to sixth examples will be described, which show simulation results showing changes in the emission light amount according to changes in the emission angle while changing the structure of the louver portions 72 of the emission angle adjustment part 7 of the first embodiment.

### (First Example)

The first example shown in Figure 12 illustrates simulation results showing changes in the emission light amount according to changes in the emission angle while changing the predetermined angle θ of the louver portions 72 of the emission angle adjustment part 7 of the first embodiment to 0, 10, 20, 30, 40, 50, and 60 degrees.

It is shown that as the predetermined angle 8 of the louver portions 72 of the emission angle adjustment part 7 increases, the emission light amount is biased toward the passenger seat 101a side. When the predetermined angle θ of the louver portions 72 of the emission angle adjustment part 7 is set to 0, 10, 20, 30, and 40 degrees, the light reaches the driver seat 101b. However, when the predetermined angle θ of the louver portions 72 of the emission angle adjustment part 7 is set to 50 degrees and 60 degrees, the light does not reach the driver seat 101b. Thus, the simulation results of the first example show that it is preferable that the predetermined angle θ of the louver portions 72 of the emission angle adjustment part 7 is more than or equal to 50 degrees.

### (Second Example)

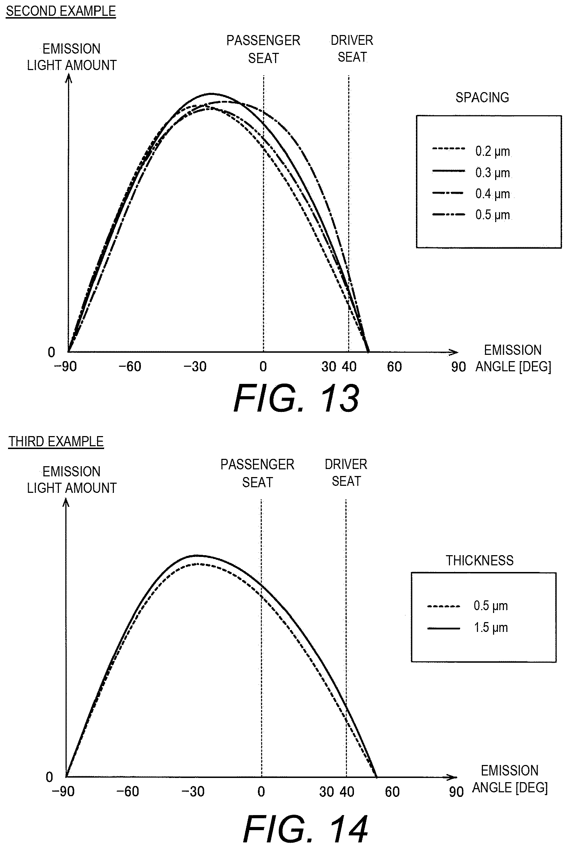

The second example shown in Figure 13 illustrates simulation results showing changes in the emission light amount according to changes in the emission angle while changing the spacing W to 0.2 µm, 0.3 µm, 0.4 µm, and 0.5 µm in a state in which the louver portions 72 of the emission angle adjustment part 7 of the first embodiment are inclined at the predetermined angle θ of 40 degrees.

It is shown that when the spacing W of the emission angle adjustment part 7 is changed to 0.2 µm, 0.3 µm, 0.4 µm, and 0.5 µm, the bias of the emission light amount does not largely change.

### (Third Example)

The third example shown in Figure 14 illustrates simulation results showing changes in the emission light amount according to changes in the emission angle while changing the thickness H to 0.5 µm and 1.5 µm in a state in which the louver portions 72 of the emission angle adjustment part 7 of the first embodiment are inclined at the predetermined angle θ of 40 degrees and the spacing W is set to 0.1 µm.

It is shown that when the thickness H of the sheet-shaped emission angle adjustment part 7 is changed to 0.5 µm and 1.5 µm, the bias of the emission light amount does not largely change.

### (Fourth Example)

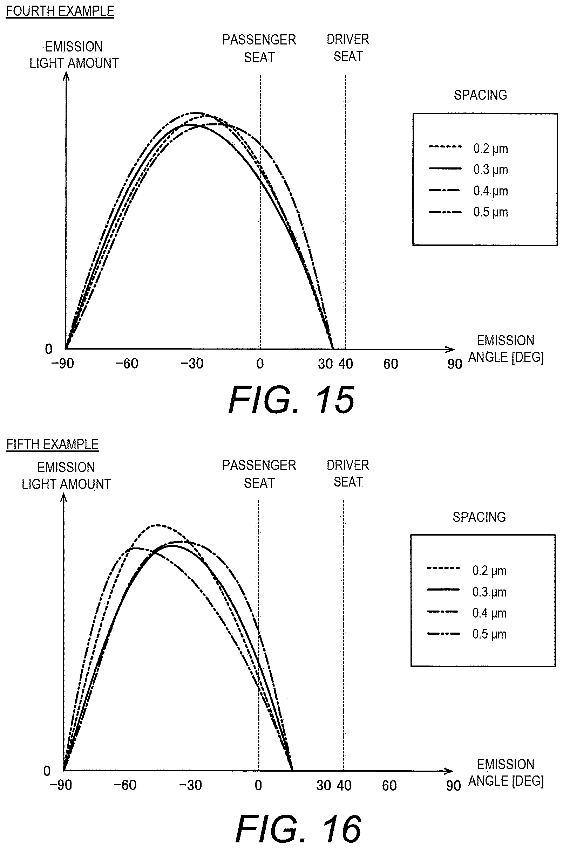

The fourth example shown in Figure 15 illustrates simulation results showing changes in the emission light amount according to changes in the emission angle while changing the spacing W to 0.2 µm, 0.3 µm, 0.4 µm, and 0.5 µm in a state in which the louver portions 72 of the emission angle adjustment part 7 of the first embodiment are inclined at the predetermined angle θ of 50 degrees.

It is shown that when the spacing W of the emission angle adjustment part 7 is changed to 0.2 µm, 0.3 µm, 0.4 µm, and 0.5 µm, the bias of the emission light amount does not largely change.

### (Fifth Example)

The fifth example shown in Figure 16 illustrates simulation results showing changes in the emission light amount according to changes in the emission angle while changing the spacing W to 0.2 µm, 0.3 µm, 0.4 µm, and 0.5 µm in a state in which the louver portions 72 of the emission angle adjustment part 7 of the first embodiment are inclined at the predetermined angle θ of 60 degrees.

It is shown that when the spacing W of the emission angle adjustment part 7 is changed to 0.2 µm, 0.3 µm, 0.4 µm, and 0.5 µm, the bias of the emission light amount does not largely change.

### (Sixth example)

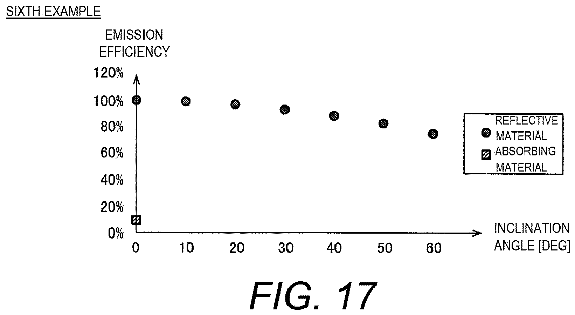

The sixth example shown in Figure 17 shows simulation results showing changes in the emission efficiency of the light emitted from the mobile vehicle mounted display device 100 while changing the predetermined angle θ of the louver portions 72 of the emission angle adjustment part 7 of the first example to 0, 10, 20, 30, 40, 50, and 60 degrees. As a comparative example, a simulation result is shown when the material of the louver portions of the emission angle adjustment part is a light absorbing material.

The emission efficiencies for the predetermined angle θ of 0, 10, 20, 30, 40, 50, and 60 degrees of the louver portions 72 of the emission angle adjustment part 7 of the first embodiment are 99.9%, 99.2%, 97.0%, 88.6%, 82.5%, and 75.0%, respectively. As a comparative example, when the material of the louver portions of the emission angle adjustment part is a light absorbing material, the emission efficiency corresponding to the louver portions 72 with the predetermined angle θ of 0 degrees is 9.9%. These show that the emission efficiency of the mobile vehicle mounted display device 100 equipped with the emission angle adjustment part 7 with the louver portions 72 formed of the reflective material of the first embodiment is better than the emission efficiency of the mobile vehicle mounted display device equipped with the emission angle adjustment part with the louver portions formed of the light absorbing material of the comparative example.

### MODIFICATION EXAMPLES

The first to fifth embodiments disclosed here should be considered in all respects to be illustrative and not restrictive. The scope of the invention is indicated by the claims, not by the descriptions of the first to fifth embodiments described above, and furthermore includes all changes (modification examples) within the scope defined by the appended claims.

For example, in the first to fifth embodiments above, examples are shown in which the light emitting parts 1 are an LED, but the present invention is not limited to this. In the present invention, the light emitting parts may be an organic EL (Electro Luminescence) or the like.

Also, in the first to fifth embodiments above, examples are shown in which the light emitting parts 1 are a direct-type LED, but the present invention is not limited to this. In the present invention, the light emitting parts may be an edge-type LED.

Also, in the first to fifth embodiments above, examples are shown in which the mobile vehicle mounted display device 100 (200, 300, 400, 500) is equipped with the prism sheet 6, but the present invention is not limited to this. In the present invention, the mobile vehicle mounted display device need not be equipped with a prism sheet.

Also, in the first to fifth embodiments above, examples are shown in which the mobile vehicle is the vehicle 101, but the present invention is not limited to this. In the present invention, the mobile vehicle may be a ship, a boat or an airplane.

Also, in the first to fifth embodiments above, examples are shown in which the mobile vehicle mounted display device 100 (200, 300, 400, 500) is positioned directly in front of the passenger seat 101a of the vehicle 101 as the mobile vehicle, but the present invention is not limited to this. In the present invention, the mobile vehicle mounted display device may be positioned between the passenger seat and the driver seat of the vehicle as a mobile vehicle, or may be positioned directly in front of the driver seat.

Also, in the first to fifth embodiments above, examples are shown in which the predetermined angle θ is 50 degrees, but the present invention is not limited to this. In the present invention, the predetermined angle may be from 1 to less than 50 degrees and from more than 50 degrees to less than 90 degrees.

Also, in the first to fifth embodiments above, examples are shown in which the adjacent louver portions 72 (272, 372, 472, and 572) do not overlap each other as viewed from the X direction (the direction in which the light emitting parts 1 and the emission angle adjustment part 7 (207, 307, 407, and 507) are aligned), but the present invention is not limited to this. In the present invention, adjacent louver portions may overlap each other as viewed from the direction in which the light emitting parts and the emission angle adjustment part are aligned.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a mobile vehicle mounted display device in an upright position on a mobile vehicle on a horizontal surface. Accordingly, these directional terms, as utilized to describe the mobile vehicle mounted display device should be interpreted relative to a mobile vehicle on a horizontal surface. The terms "left" and "right" are used to indicate the "right" when referencing from the right side as viewed from the front side of the mobile vehicle mounted display device, and the "left" when referencing from the left side as viewed from the front side of the mobile vehicle display device.

The phrase "at least one of" as used in the present application means "one or more" of a desired choice. For one example, the phrase "at least one of" as used in the present application means "only one single choice" or "both of two choices" if the number of its choices is two. For another example, the phrase "at least one of" as used in the present application means "only one single choice" or "any combination of equal to or more than two choices" if the number of its choices is equal to or more than three. Also, the term "and/or" as used in the present application means "either one or both of".

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from the present application that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A display device for a mobile vehicle, the display device comprising:
at least one light emitting part configured to emit light;
an emission angle adjustment part configured to transmit the light from the at least one light emitting part therethrough while adjusting an emission angle of the light from the at least one light emitting part; and
a light control film part arranged to sandwich the emission angle adjustment part between the at least one light emitting part and the light control film part in a first direction of the display device, the light control film part being configured to switch between a transmitting state to transmit light from the emission angle adjustment part therethrough and a diffusing state to diffuse the light from the emission angle adjustment part,
the emission angle adjustment part having at least one louver portion that is made of reflective material and is configured to adjust the emission angle of the light from the at least one light emitting part.

2. The display device according to claim 1, wherein
the at least one louver portion is inclined at a predetermined angle relative to the first direction to direct the light from the at least one light emitting part toward one side of a second direction of the display device that is perpendicular to the first direction.

3. The display device according to claim 2, wherein
the at least one louver portion is inclined to direct the light from the at least one light emitting part laterally away from a driver seat of the mobile vehicle while the display device is mounted to the mobile vehicle.

4. The display device according to claim 2 or 3, wherein
the at least one louver portion is inclined laterally toward a passenger seat of the mobile vehicle as moving toward a front side of the display device along the first direction while the display device is mounted to the mobile vehicle.

5. The display device according to any one of claims 2 to 4, wherein
the predetermined angle is an angle more than or equal to 50 degrees and less than or equal to 60 degrees.

6. The display device according to any one of claims 2 to 5, wherein
the at least one louver portion is inclined to control distribution of an emission light amount of light from the light control film part.

7. The display device according to claim 6, wherein
the at least one louver portion is inclined such that a peak of the distribution of the emission light amount is laterally offset from a driver seat of the mobile vehicle while the display device is mounted to the mobile vehicle.

8. The display device according to claim 6 or 7, wherein
the at least one louver portion is inclined such that a peak of the distribution of the emission light amount is laterally located away from a driver seat of the mobile vehicle with respect to a passenger seat of the mobile vehicle while the display device is mounted to the mobile vehicle.

9. The display device according to any one of claims 1 to 8, wherein
the at least one louver portion includes a plurality of louver portions that are arranged relative to each other in a second direction of the display device that is perpendicular to the first direction.

10. The display device according to claim 9, wherein
the louver portions are inclined at approximately the same predetermined angle relative to the first direction.

11. The display device according to claim 9, wherein
the louver portions includes a first louver portion that is inclined at a first predetermined angle relative to the first direction and a second louver portion that is inclined at a second predetermined angle relative to the first direction, the first predetermined angle and the second predetermined angle being different from each other.

12. The display device according to claim 11, wherein
the first louver portion is laterally located closer to a drive seat of the mobile vehicle than the second louver portion, and
the first predetermined angle is greater than the second predetermined angle.

13. The display device according to any one of claims 9 to 12, wherein
the emission angle adjustment part has a sheet shape and further includes a translucent material that is disposed between adjacent louver portions of the louver portions.

14. The display device according to any one of claims 9 to 13, wherein
the louver portions are arranged such that adjacent louver portions of the louver portions do not overlap each other as viewed in the first direction.

15. The display device according to any one of claims 1 to 14, wherein
the at least one louver portion further includes a first reflective portion and a second reflective portion, the first reflective portion being located closer to the at least one light emitting part in the first direction than the second reflective portion and having a higher reflectance than the second reflective portion.
